(19) Europäisches Patentamt / European Patent Office / Office européen des brevets

(11) **EP 1 763 255 B1**

(12) **EUROPEAN PATENT SPECIFICATION**

(45) Date of publication and mention
of the grant of the patent:
**09.09.2015 Bulletin 2015/37**

(51) Int Cl.:
***H04N 9/31*** *(2006.01)*

(21) Application number: **06250583.9**

(22) Date of filing: **03.02.2006**

(54) **Projection type display device and method for controlling the same**

Projektorähnliche Anzeigevorrichtung und Verfahren zu ihrer Ansteuerung

Dispositif d'affichage de type projection et son procédé de contrôle

(84) Designated Contracting States:
**GB**

(30) Priority: **09.09.2005 KR 2005084098**

(43) Date of publication of application:
**14.03.2007 Bulletin 2007/11**

(73) Proprietor: **LG Electronics Inc.**
**Youngdungpo-gu**
**Seoul (KR)**

(72) Inventor: **Wang, Do San**
**Seo-gu**
**Daegu (KR)**

(74) Representative: **Hale, Peter et al**
**Kilburn & Strode LLP**
**20 Red Lion Street**
**London WC1R 4PJ (GB)**

(56) References cited:
**US-A1- 2004 008 177**

- **PATENT ABSTRACTS OF JAPAN vol. 2003, no. 12, 5 December 2003 (2003-12-05) -& JP 2004 336664 A (SONY CORP), 25 November 2004 (2004-11-25)**
- **PATENT ABSTRACTS OF JAPAN vol. 2002, no. 11, 6 November 2002 (2002-11-06) -& JP 2002 196736 A (SEIKO EPSON CORP), 12 July 2002 (2002-07-12)**

**Description**

The present invention relates to a display device. It more particularly relates to a projection type display device and a method for controlling the same, which are capable of accurately controlling the brightness of an image to be displayed.

Generally, projection type display devices are appliances which realize a large screen using a principle of projecting an image on a screen by use of mirrors and a projection lens. Such projection type display devices are mainly classified into cathode ray tube (CRT) optical units, liquid crystal display (LCD) optical units, digital light processing (DLP) optical units, and a liquid crystal on silicon (LCOS) optical units.

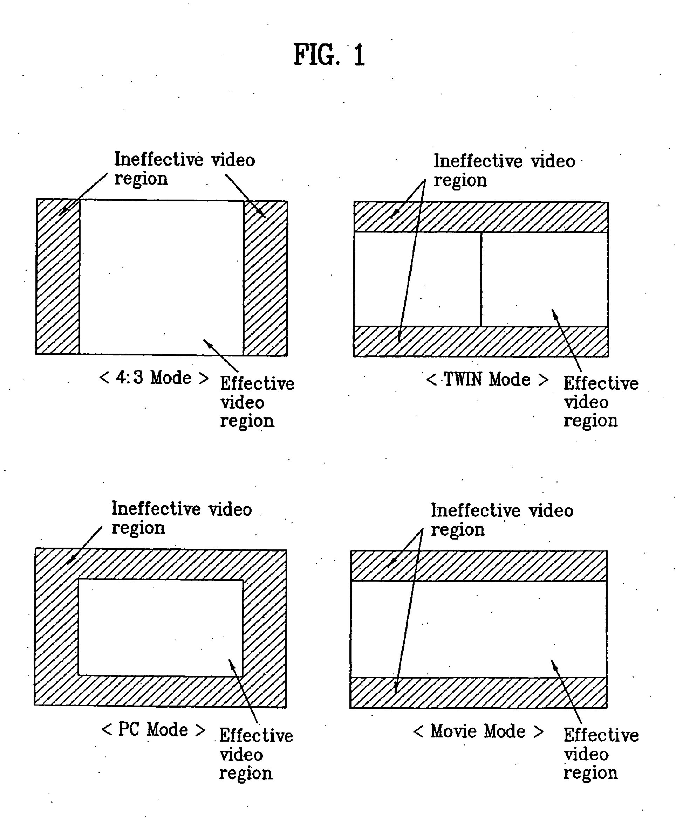

FIG. 1 is a view of images displayed in diverse display modes, illustrating effective and ineffective regions of each image. Projection type display devices can display an image in diverse display modes. Referring to FIG. 1, there are ineffective regions (e.g., black bars or black voids) at left and right sides of a screen in a 4:3 mode. The ineffective regions are regions where no actual image is displayed. The ineffective regions are exhibited in the form of black regions because no video signals are supplied to pixels corresponding to the ineffective regions. In a TWIN mode or a movie mode, ineffective regions are exhibited at upper and lower edges or sides of a screen. In a personal computer (PC) mode, there are ineffective regions at upper, lower, left and right sides.

In a conventional projection type display device, gray information of the entire portion of the screen is used to extract histogram data for control of the optical power of the projection type display device. That is, gray information of all dots in the screen is detected, and histogram data is produced based on the detected gray information. In such a conventional case, however, the brightness of the image displayed on the screen is lower than a brightness set for the image because the optical power of the projection type display device is controlled based on the average gray value of the entire portion of the screen. For this reason, when the area of ineffective regions is increased, as in the PC mode, the lowering of the brightness of the image displayed on the screen becomes more severe.

JP2003 133602 discloses a measurement means to measure lifetime of video signals in order to determine which regions of the video are ineffective video regions.

US2004/0008177 discloses a chromatic averaging unit which calculates average brightness of input images and controls the backlight unit of a display device accordingly.

JP2002 196736 discloses a method to adjust the projection size of images according to the aspect ratio to display the image to maximum efficiency.

The present invention seeks to provide an improved projection-type display.

Embodiments of the present invention can provide a projection type display device and a method for controlling the same which are capable of preventing a reduction in image brightness caused by an ineffective region.

In accordance with a first aspect of the invention, a method for controlling a projection type display device comprises the steps of: sampling brightness values of a part of pixels in each frame of an input signal; calculating an average value of the brightness value of the sampled pixels; comparing the calculated average value with a reference brightness value; determining the frame to be an effective video region or ineffective video regions, based on the results of the comparison; determining the number of vertical synchronizing signals generated during input of video signal having a brightness lower than the reference brightness value to determine the frames as ineffective video regions only when the number of the vertical synchronizing signal is higher than a predetermined value; calculating an average brightness value of the effective video region (S404); and controlling brightness of the projection type display device based on the calculated average brightness value (S405).

The method may comprise generating a histogram based on the brightness value of the effective video region.

The method may further comprise calculating the average brightness value of the effective video region using the histogram.

In accordance with another aspect of the invention, a projection type display device comprises a controller arranged for: sampling brightness values of a part of pixels in each frame of an input signal; comparing an average value of the brightness value of the sampled pixels; determining the frame to be an effective vide region or ineffective video regions, based on the results of the comparison; determining the number of vertical synchronizing signals generated during input of video signal having a brightness value lower than the reference brightness value to determine the frames as ineffective video regions only when the number of vertical synchronizing signal is higher than a predetermined value; calculating an average brightness value of the effective video region; and controlling a brightness of the projection type display device based on the calculated average brightness value.

It is to be understood that both the foregoing general description and the following detailed description of the present invention are exemplary and explanatory and are intended to provide further explanation of the invention as claimed.

Embodiments of the invention will now be described by way of non-limiting example only, with reference to the drawings, in which:

FIG. 1 is a view of images displayed in diverse display modes, illustrating effective and ineffective regions of each image;

FIG. 2 is a block diagram illustrating an exemplary embodiment of a projection type display device according to the present invention;

FIG. 3 is a waveform diagram of signals used in the present invention;

FIG. 4 is a flow chart explaining a method for controlling the projection type display device in accordance with a first embodiment of the present invention; and

FIG. 5 is a flow chart explaining a method for controlling the projection type display device.

Wherever possible, the same reference numbers will be used throughout the drawings to refer to the same or like parts.

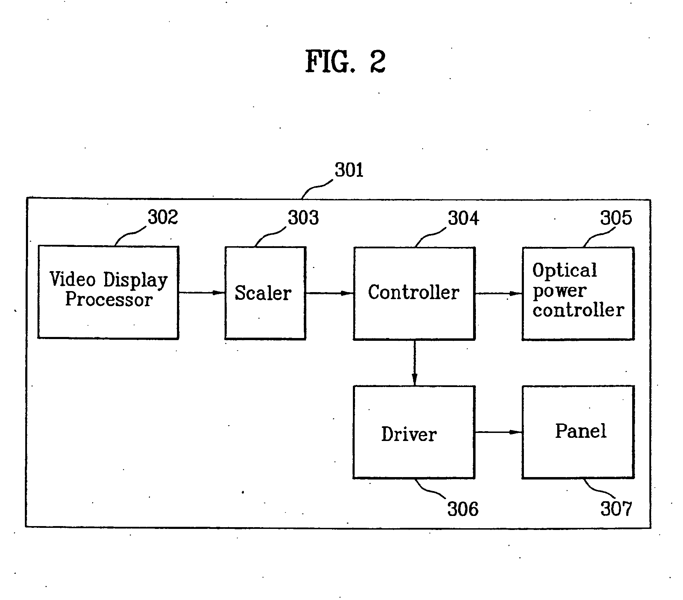

FIG. 2 is a block diagram illustrating an exemplary embodiment of a projection type display device according to the present invention. FIG. 2 shows only the constituent elements of the projection type display device essentially required to accomplish the object of the present invention, without showing general constituent elements required to receive and display broadcast signals. Although an illustration and description of the general constituent elements of the projection type display device have been omitted in the interest of clarity, these general constituent elements will be apparently appreciated by those skilled in the technical field.

The projection type display device may include a CRT optical unit, an LCD optical unit, a DLP optical unit, or an LCOS optical unit.

Referring to FIG. 2, a broadcast signal of a 1080i format or a signal from an external appliance is inputted to the projection type display device through a video processor 302. The external appliance may include a personal video recorder (PVR), a DVD player, a PC, and a set-top box. FIG. 2 illustrates a video display processor (VDP) as an example of the video processor 302.

A 1080i-format video signal output from the video processor 302 is applied to a scaler 303 which converts the video signal of the 1080i format to a video signal of a 1080p format. Where the video signal output from the scaler 303 is a video signal having the 1080i format, scanning of video to be displayed is carried out such that the video is simultaneously scanned to odd and even fields of the screen. On the other hand, where the video signal output from the scaler 303 is a video signal having the 1080p format, scanning of video to be displayed is carried out such that the video is alternately scanned to the odd and even fields of the screen.

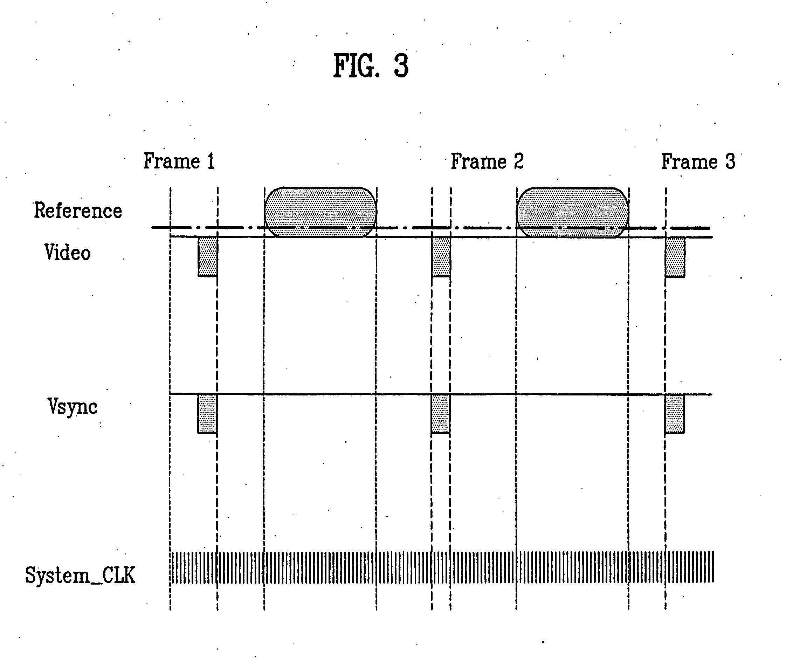

The 1080p-format video signal output from the scaler 303 is applied to a controller 304. The controller 304 determines effective and ineffective video regions of the video to be displayed on a panel 307, based on the brightness value of the applied video signal. As shown in FIG. 3, the controller 304 compares the brightness value of the video signal with a reference brightness value to determine the effective and ineffective video regions, as shown in FIG. 3. The controller 304 produces a histogram based on the brightness value of the effective video region, and calculates an average brightness value of the effective video region based on the produced histogram. Alternatively, the controller 304 may produce a histogram base on the ratio of the effective video region to the entire video region. The histogram is data used to control the brightness of video to be displayed. Thus, the controller 304 controls the optical power of the optical power controller 305 based on the average brightness value of the effective video region and the ratio of the effective video region to the entire video region. The controller 304 outputs a pulse width modulation (PWM) signal to control the optical power controller 305.

The optical power controller 305 is arranged in front of an optical projection lens, to control the amount of emission light under the control of the controller 304, and thus, to control the brightness of video. An example of the optical power controller 305 according to the present invention is a contrast enhancement aperture. In order to drive the panel 307, a panel timing signal is generated from a panel driver 306. The panel driver 306 outputs the panel timing signal to the panel 307, together with the video signal.

Hereinafter, embodiments of a method for controlling the projection type display device will be described.

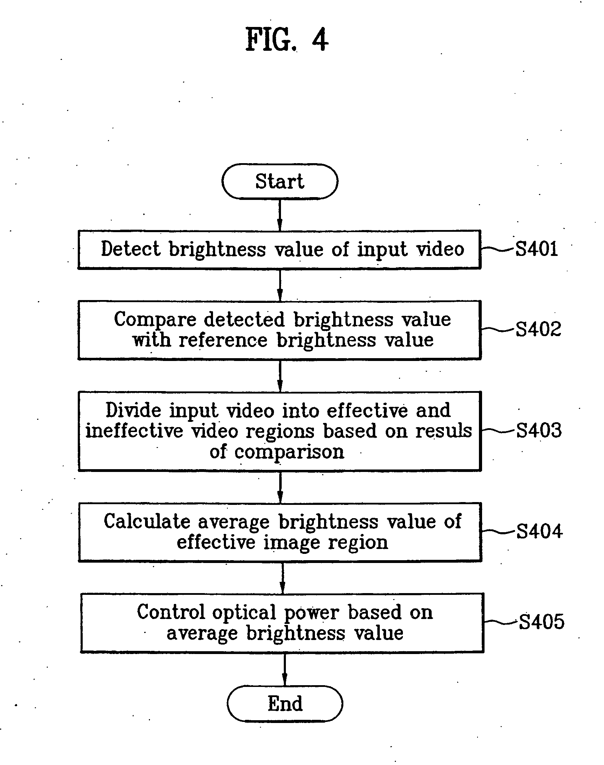

FIG. 4 is a flow chart explaining a method for controlling the projection type display device in accordance with an embodiment. When a video signal from a broadcasting station or from an external appliance, the controller 304 detects the brightness value of the received video signal (S401), and compares the detected brightness value with a reference brightness value (S402). In this case, the controller 304 may perform the detection and comparison of the brightness value of the video signal for each pixel, may perform the detection and comparison of the brightness value (average brightness value) of the video signal for each frame, or may perform sampling of the brightness values of a part of pixels in each frame of the video signal, and comparison of the sampled brightness values with a reference brightness value.

If the brightness value of the video signal associated with a pixel or frame is not lower than the reference brightness value, the controller 304 determines that the pixel or frame is an effective video region. On the other hand, if the brightness value of the video signal associated with the pixel or frame is lower than the reference brightness value, the controller 304 determines that the pixel or frame is an ineffective video region. For example, when the reference brightness value is set to 15 in the case in which data representing brightness has a range of 1,024, the video signal having a brightness value lower than 15 is determined to be an ineffective video region. The controller 304 determines the effective and ineffective video regions of the video based on the brightness value of the video signal.

The controller 304 also determines the number of vertical synchronizing signals V-sync generated during input of a video signal having a brightness value lower than the reference brightness value, to determine the pixels or frames of the video signal as ineffective video regions only when the number of the vertical synchronizing signals V-sync is higher than a predetermined value. This is because, even when the brightness value of one frame is lower than the reference brightness value, the frame may be an ineffective region.

After the determination of the effective and ineffective video regions, the controller 304 produces a histogram based on the brightness value for each pixel or each frame corresponding to the effective video region, and calculates an average brightness value of the effective video region based on the produced histogram (S404). For the calculation of the average brightness value of the effective video region, the controller 304 uses the previously-detected brightness value for each pixel or each frame.

Thereafter, the controller 304 controls the optical power of the optical power controller 305 based on the average brightness value of the effective video region (S405). For example, when the average brightness value of the effective video region is high, the controller 304 increases the optical power of the optical power controller 305. On the other hand, when the average brightness value of the effective video region is low, the controller 304 decreases the optical power of the optical power controller 305.

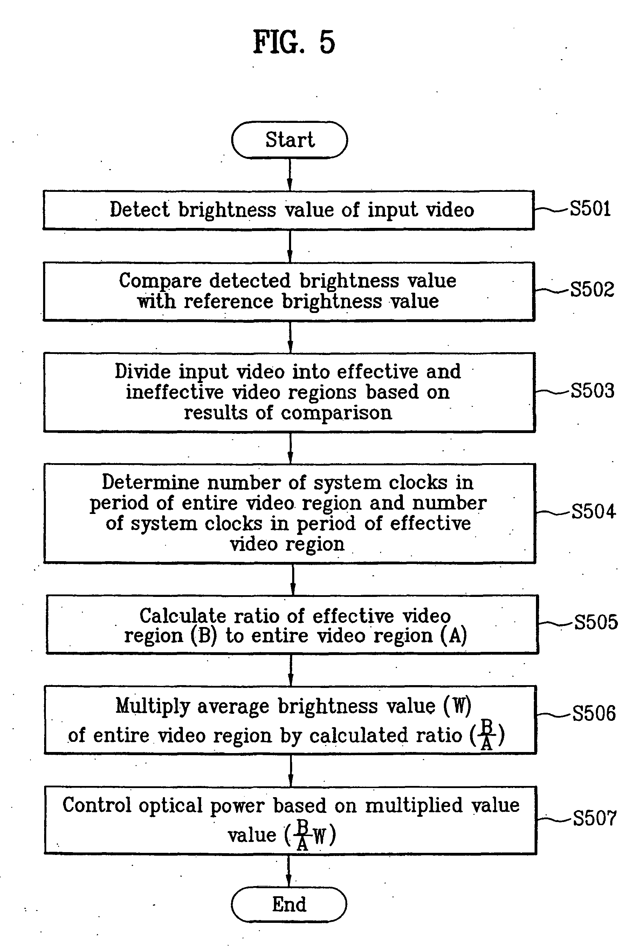

FIG. 5 is a flow chart explaining a method for controlling the projection type display device not in accordance with the invention. When a video signal from a broadcasting station or from an external appliance is input, the controller 304 detects the brightness value of the received video signal (S501), and compares the detected brightness value with a reference brightness value (S502), as in the first embodiment.

If the brightness value of the video signal associated with a pixel or frame is not lower than the reference brightness value, the controller 304 determines that the pixel or frame is an effective video region. On the other hand, if the brightness value of the video signal associated with the pixel or frame is lower than the reference brightness value, the controller 304 determines that the pixel or frame is an ineffective video region. Thus, the controller 304 determines effective and ineffective video regions based on the brightness value of the video signal (S503).

The controller 304 also determines the number of vertical synchronizing signals V-sync generated during input of a video signal having a brightness value lower than the reference brightness value, to determine the pixels or frames of the video signal as ineffective video regions only when the number of the vertical synchronizing signals V-sync is higher than a predetermined value.

After the determination of the effective and ineffective video regions, the controller 304 determines the number of system clocks system_CLK generated in the period of the effective video region and the number of system clocks system_CLK generated in the period of the ineffective video region (S504). Using the determined number of system clocks system_CLK in the period of the effective video region and the determined number of system clocks system_CLK in the period of the ineffective video region, it is also possible to determine the number of system clocks system_CLK in the total video period.

As shown in FIG. 3, the controller 304 outputs a number of system clocks system_CLK in one period (one frame) of vertical synchronizing signals Vsync. Vertical scan lines or horizontal scan lines are supplied to the panel 307 in accordance with the system clocks system_CLK, respectively. Accordingly, if the number of system clocks system_CLK generated during the period of the effective video region and the number of system clocks system_CLK generated during the period of the ineffective video region are determined, the number of vertical or horizontal scan lines can then be determined. Therefore, it is possible to determine the size of the effective video region and the size of the ineffective video region.

The controller 304 then determines the ratio of the effective video region to the entire video region based on the number of system clocks system_CLK generated during the period of the effective video region and the number of system clocks system_CLK generated during the period of the ineffective video region (S505). The controller 304 can also determine the ratio of the effective video region to the ineffective vide region.

This provides an example of a proportion equation for production of a histogram using the number of system clocks, as follows:

$$A : W = B : X$$

where, "A" represents the number of system clocks in the total video period, "W" represents the histogram data value of the entire video, namely, the average brightness value of the entire video, "B" represents the number of system clocks in the period of the effective video region of the entire video ("B" may be represented by "A (the number of system clocks in the total video period) - C (the number of system clocks in the period of the ineffective video region)", and "X" represents a new histogram data value.

The proportion equation may be expressed as follows:

$$X = \frac{BW}{A} = \left(1 - \frac{C}{A}\right)W$$

Thus, the new histogram data value X varies depending on the ratio B/A, namely, the ratio of the number of system clocks in the period of the effective video region, B, to the number of system clocks in the total video period, A. For example, when the size of the effective image region increases, the new histogram data value X is increased. On the other hand, when the effective image region has a reduced size, the new histogram data value X is decreased.

The new histogram data value X also varies depending on the ratio C/A, namely, the ratio of the number of system clocks in the period of the ineffective video region, C, to the number of system clocks in the total video period, A. For example, when the size of the ineffective image region increases, the new histogram data value X is decreased. On the other hand, when the ineffective image region has a reduced size, the new histogram data value X is increased.

The controller 304 calculates the ratio of the effective video region to the entire video region based on the number of system clocks. In order to obtain the new histogram data value X, the controller 304 multiplies the histogram data value W of the entire video by the calculated ratio B/A (S506)

Thereafter, the controller 304 controls the optical power of the optical power controller 305 based on the calculated new histogram data X (S507). For example, when the new histogram data value X increases, the controller 304 increases the optical power of the optical power controller 305. On the other hand, when the histogram data value X decreases, the controller 304 decreases the optical power of the optical power controller 305.

As apparent from the above description, input video is divided into an effective video region and an ineffective video region so that the brightness of the video is controlled based on the average brightness value of the effective video region or the size of the effective video region. Accordingly, it is possible to prevent a reduction in the brightness of the video caused by the ineffective video region. It is also possible to appropriately control the brightness of video in accordance with diverse display modes.

It will be apparent to those skilled in the art that various modifications and variations can be made in the present invention without departing from the scope of the invention. Thus, it is intended that the present invention covers the modifications and variations of this invention provided they come within the scope of the claims.

**Claims**

1. A method for controlling a projection type display device, comprising the steps of:

sampling brightness values of a part of pixels in each frame of an input signal (S401);
calculating an average value of the brightness value of the sampled pixels;
comparing the calculated average value with a reference brightness value (S402);
determining the frames to be an effective video region or ineffective video regions, based on the results of the comparison (S403);
determining the number of vertical synchronizing signals generated during input of video signal having a brightness lower than the reference brightness value to determine the frames as ineffective video regions only when the number of the vertical synchronizing signal is higher than a predetermined value;
calculating an average brightness value of the effective video region (S404);
and
controlling brightness of the projection type display device based on the calculated average brightness value (S405).

2. The method according to claim 1, further comprising:

generating a histogram based on the brightness value of the effective video region.

3. The method according to claim 2, wherein the step of calculating the average brightness value of the effective video region uses the histogram.

4. A projection type display device comprising:

an optical power controller (305) arranged to adjust a brightness for display of video; and
a controller (304) arranged for:

sampling brightness values of a part of pixels in each frame of an input signal,
comparing an average value of the brightness value of the sampled pixels,
determining the frames to be an effective video region or ineffective video regions, based on the results of the comparison,
determining the number of vertical synchronizing signals generated during input of video signal having a brightness value lower than the reference brightness value to determine the frames as ineffective video regions only when the number of vertical synchronizing signal is higher than a predetermined value,
calculating an average brightness value of the effective video region,
and

controlling a brightness of the projection type display device based on the calculated average brightness value.

5. The projection type display device according to claim 4, wherein the controller (304) generates a histogram based on the brightness value of the effective video region.

6. The projection type display device according to claim 4, wherein the controller (304) is arranged to calculate the average brightness value of the effective video region by using the histogram.

## Patentansprüche

1. Verfahren zum Steuern einer Anzeigevorrichtung vom Projektionstyp, das die folgenden Schritte umfasst:

Abtasten von Helligkeitswerten eines Teils von Pixeln in jedem Frame eines Eingangssignals (S401);
Berechnen eines Durchschnittswerts des Helligkeitswerts der abgetasteten Pixel;
Vergleichen des berechneten Durchschnittswerts mit einem Referenz-Helligkeitswert (S402);
Bestimmen, dass die Frames ein effektiver Videobereich oder ineffektive Videobereiche sind, basierend auf den Ergebnissen des Vergleichs (S403);
Bestimmen der Anzahl vertikaler Synchronisiersignale, die während der Eingabe eines Videosignals erzeugt werden, mit einer Helligkeit, die geringer ist, als der Referenz-Helligkeitswert, um die Frames nur dann als ineffektive Videobereiche zu bestimmen, wenn die Anzahl der vertikalen Synchronisiersignale höher als ein vorgegebener Wert ist;
Berechnen eines durchschnittlichen Helligkeitswerts des effektiven Videobereichs (S404); und
Steuern der Helligkeit der Anzeigevorrichtung vom Projektionstyp basierend auf dem berechneten durchschnittlichen Helligkeitswert (S405).

2. Verfahren nach Anspruch 1, das des Weiteren umfasst:

Erzeugen eines Histogramms basierend auf dem Helligkeitswert des effektiven Videobereichs.

3. Verfahren nach Anspruch 2, wobei der Schritt des Berechnens des durchschnittlichen Helligkeitswerts des effektiven Videobereichs das Histogramm verwendet.

4. Anzeigevorrichtung vom Projektionstyp, die aufweist:

einen optischen Leistungscontroller (305), der dazu ausgelegt ist, die Helligkeit zum Anzeigen von Video einzustellen; und
einen Controller (304), der ausgelegt ist zum:

Abtasten von Helligkeitswerten eines Teils von Pixeln in jedem Frame eines Eingangssignals;
Vergleichen eines Durchschnittswerts des Helligkeitswerts der abgetasteten Pixel;

Bestimmen, dass die Frames ein effektiver Videobereich oder ineffektive Videobereiche sind, basierend auf den Ergebnissen des Vergleichs;
Bestimmen der Anzahl vertikaler Synchronisiersignale, die während der Eingabe eines Videosignals erzeugt werden, mit einer Helligkeit, die geringer ist, als der Referenz-Helligkeitswert, um die Frames nur dann als ineffektive Videobereiche zu bestimmen, wenn die Anzahl der vertikalen Synchronisiersignale höher als ein vorgegebener Wert ist;
Berechnen eines durchschnittlichen Helligkeitswerts des effektiven Videobereichs; und
Steuern der Helligkeit der Anzeigevorrichtung vom Projektionstyp basierend auf dem berechneten durchschnittlichen Helligkeitswert.

5. Anzeigevorrichtung vom Projektionstyp nach Anspruch 4, wobei der Controller (304) basierend auf dem Helligkeitswert des effektiven Videobereichs ein Histogramm erzeugt.

6. Anzeigevorrichtung vom Projektionstyp nach Anspruch 4, wobei der Controller (304) dazu ausgelegt ist, den durchschnittlichen Helligkeitswert des effektiven Videobereichs durch Verwenden des Histogramms zu berechnen.

## Revendications

1. Procédé de commande d'un dispositif d'affichage de type à projection, comprenant les étapes :

d'échantillonnage de valeurs de luminosité d'une partie de pixels dans chaque trame d'un signal d'entrée (S401) ;
de calcul d'une valeur moyenne de la valeur de luminosité des pixels échantillonnés ;
de comparaison de la valeur moyenne calculée à une valeur de luminosité de référence (S402) ;
de détermination des trames pour être une région vidéo efficace ou des régions vidéo inefficaces, en se basant sur les résultats de la comparaison (S403) ;

de détermination du nombre de signaux de synchronisation verticale produits pendant l'entrée de signal vidéo ayant une luminosité inférieure à la valeur de luminosité de référence pour déterminer les trames en tant que régions vidéo inefficaces seulement lorsque le nombre des signaux de synchronisation verticale est supérieur à une valeur prédéterminée ;

de calcul d'une valeur de luminosité moyenne de la région vidéo efficace (S404) ; et

de commande de la luminosité du dispositif d'affichage de type à projection en se basant sur la valeur de luminosité moyenne calculée (S405).

2. Procédé selon la revendication 1, comprenant en outre :

la production d'un histogramme basé sur la valeur de luminosité de la région vidéo efficace.

3. Procédé selon la revendication 2, dans lequel l'étape de calcul de la valeur de luminosité moyenne de la région vidéo efficace utilise l'histogramme.

4. Dispositif d'affichage de type à projection comprenant :

une unité de commande de puissance optique (305) agencée pour ajuster une luminosité pour l'affichage de vidéo ; et
une unité de commande (304) agencée pour :

échantillonner des valeurs de luminosité d'une partie de pixels dans chaque trame d'un signal d'entrée,
comparer une valeur moyenne de la valeur de luminosité des pixels échantillonnés,
déterminer les trames pour être une région vidéo efficace ou des régions vidéo inefficaces, en se basant sur les résultats de la comparaison,
déterminer le nombre de signaux de synchronisation verticale produits pendant l'entrée de signal vidéo ayant une valeur de luminosité inférieure à la valeur de luminosité de référence pour déterminer les trames en tant que régions vidéo inefficaces seulement lorsque le nombre de signaux de synchronisation verticale est supérieur à une valeur prédéterminée,
calculer une valeur de luminosité moyenne de la région vidéo efficace, et
commander une luminosité du dispositif d'affichage de type à projection en se basant sur la valeur de luminosité moyenne calculée.

5. Dispositif d'affichage de type à projection selon la revendication 4, dans lequel l'unité de commande (304) produit un histogramme basé sur la valeur de luminosité de la région vidéo efficace.

6. Dispositif d'affichage de type à projection selon la revendication 4, dans lequel l'unité de commande (304) est agencée pour calculer la valeur de luminosité moyenne de la région vidéo efficace en utilisant l'histogramme.

# FIG. 1

Ineffective video
region

<4:3 Mode> Effective
video
region

Ineffective video
region

<TWIN Mode> Effective
video
region

Ineffective video
region

<PC Mode> Effective
video
region

Ineffective video
region

<Movie Mode> Effective
video
region

# FIG. 2

301

302       303       304       305

| Video Display Processor | Scaler | Controller | Optical power controller |

Driver      Panel

306       307

# FIG. 3

# FIG. 4

```
        ( Start )
            │
            ▼
┌─────────────────────────────────┐
│ Detect brightness value of input video │──S401
└─────────────────────────────────┘
            │
            ▼
┌─────────────────────────────────┐
│  Compare detected brightness value    │──S402
│    with reference brightness value    │
└─────────────────────────────────┘
            │
            ▼
┌─────────────────────────────────┐
│  Divide input video into effective and │
│ ineffective video regions based on resuls │──S403
│           of comparison           │
└─────────────────────────────────┘
            │
            ▼
┌─────────────────────────────────┐
│  Calculate average brightness value of  │──S404
│         effective image region         │
└─────────────────────────────────┘
            │
            ▼
┌─────────────────────────────────┐
│     Control optical power based on      │──S405
│        average brightness value        │
└─────────────────────────────────┘
            │
            ▼
        ( End )
```

# FIG. 5

```
Start
  │
  ▼
Detect brightness value of input video ─── S501
  │
  ▼
Compare detected brightness value
with reference brightness value ─── S502
  │
  ▼
Divide input video into effective and
ineffective video regions based on
results of comparison ─── S503
  │
  ▼
Determine number of system clocks in
period of entire video region and number
of system clocks in period of effective
video region ─── S504
  │
  ▼
Calculate ratio of effective video
region (B) to entire video region (A) ─── S505
  │
  ▼
Multiply average brightness value (W)
of entire video region by calculated ratio ($\frac{B}{A}$) ─── S506
  │
  ▼
Control optical power based on multiplied value
value ($\frac{B}{A}$W) ─── S507
  │
  ▼
End
```

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003133602 A
- US 20040008177 A
- JP 2002196736 A